# FASCICULE DE BREVET EUROPEEN

(11) **EP 1 414 664 B1**
(45) Date de publication et mention de la délivrance du brevet: **18.05.2005**
(21) Numéro de dépôt: 02772105.9
(22) Date de dépôt: 24.07.2002
(51) Int. Cl.: B60K 15/05, B60K 15/04

(54) **SYSTEME D'OBTURATION POUR TUBULURE DE REMPLISSAGE DE RESERVOIR A CARBURANT ET PROCEDE POUR OUVRIR CETTE TUBULURE**
VERSCHLUSSSYSTEM FÜR DAS EINFÜLLROHR EINES KRAFTSTOFFTANKS UND VERFAHREN ZUM ÖFFNEN DIESES ROHRES
CLOSURE SYSTEM FOR FUEL TANK FILLER NECK AND METHOD FOR OPENING SAID FILLER NECK

(30) Priorité: 25.07.2001 FR 0110044
(43) Date de publication de la demande: 06.05.2004
(60) Demande divisionnaire: 05101678.0
(73) Titulaire: Inergy Automotive Systems Research (SA), 1120 Bruxelles (BE)
(72) Inventeur: ROPERT, Jérôme, 53000 Laval (FR); BLANC-BRUDE, Guillaume, Kirin Bayside Village A-06, Yokohama 231-0801 (JP); GIRARD, Dominique, 53870 Montigne le Brillant (FR); ROUXEL, Thierry, 53210 Argentre (FR)
(74) Mandataire: Vande Gucht, Anne
(86) Numéro de dépôt international: PCT/EP2002/008323
(87) Numéro de publication internationale: WO 2003/010022

(56) Documents cités:
- EP-A- 0 980 780
- DE-A- 19 746 236
- FR-A- 2 710 721
- US-A- 5 435 358

## Description

La présente invention concerne un système d'obturation pour tubulure de remplissage de réservoir à carburant.

Les tubulures de remplissage présentes sur les réservoirs à carburant, en particulier les réservoirs embarqués dans les véhicules automobiles, sont obturées pendant l'utilisation normale du réservoir, en dehors des périodes de remplissage. L'obturation est généralement réalisée au moyen d'un bouchon que l'on introduit dans la partie supérieure de la tubulure tout en lui imprimant un mouvement de rotation afin de fermer la tubulure de manière étanche aux liquides et aux gaz. Divers types de bouchons se rencontrent, en métal et/ou en matière plastique, l'étanchéité étant réalisée par serrage d'un joint obtenu par vissage ou par la rotation d'une clé introduite au centre de la partie extérieure à la tubulure.

Les opérations d'enlèvement du bouchon avant remplissage du réservoir et de replacement de ce bouchon et de fermeture de la tubulure après remplissage sont la plupart du temps effectuées manuellement par l'utilisateur ou le préposé d'une station-service délivrant du carburant Lorsque le remplissage du réservoir se termine, un oubli de replacement du bouchon peut parfois se produire et donne lien alors à la perte de ce dernier et au maintien de la tubulure ouverte à l'atmosphère pendant un temps plus ou moins long. Durant cette période, des pertes en carburant liquide peuvent survenir et des vapeurs s'échappent dans l'atmosphère ambiante.

Dans le but d'éviter les pertes de bouchon et la contamination de l'atmosphère qui s'ensuit, des systèmes d'obturation intégrés à la tubulure de remplissage ont été proposés, en remplacement du bouchon traditionnel. On connaît par exemple un système pour robot de remplissage avec les caractéristiques du préambule des revendications 1 et 8 par le brevet US-5,435,358 dans lequel le bec du pistolet de distribution de carburant provoque l'ouverture de la tubulure par fourniture d'un couple de rotation et entraînement d'une bague qui commande un dispositif à engrenage.

Dans ce système, il est cependant difficile d'aligner parfaitement le bec du pistolet de distribution dans l'axe de la bague et la rotation du bec du pistolet ne peut être envisagée facilement dans le cas d'une utilisation manuelle ne faisant pas appel à un robot, par exemple avec un pistolet traditionnel qui équipe les stations-service actuelles. Avec ce système, au contraire, le réservoir ne peut être rempli que dans une installation de distribution de carburant entièrement robotisée.

L'invention a dès lors pour objet un système d'obturation qui permette la suppression du bouchon de tubulure et la fermeture automatique de cette dernière après remplissage et ne requière pas nécessairement d'installation robotisée de distribution de carburant tout en autorisant par contre l'utilisation manuelle de pistolets de distribution traditionnels équipant les stations-service existantes.

A cet effet l'invention concerne un système d'obturation intégré à une tête de tubulure de remplissage de réservoir à carburant, comprenant un obturateur et permettant l'ouverture automatique de la tubulure via l'action d'un pistolet distributeur de carburant, selon lequel l'obturateur est escamotable sous l'action d'une poussée dirigée contre lui selon un axe parallèle à l'axe de la tête de tubulure et en ce qu'un ressort de rappel permet de maintenir l'obturateur en position fermée.

Par réservoir à carburant, on entend désigner tout type de réservoir capable de stocker un carburant liquide et/ou gazeux dans des conditions de pression et température variées. Plus particulièrement visés sont les réservoirs du type de ceux que l'on rencontre dans les véhicules automobiles. Dans le vocable "véhicule automobile", on entend inclure aussi bien les voitures, les motocyclettes et les camions.

La tubulure de remplissage est un conduit qui communique avec l'intérieur du réservoir et qui permet l'introduction de carburant.

Le réservoir et la tubulure peuvent être réalisés en métal ou en matière plastique.

Le système d'obturation conforme à l'invention est bien adapté à un ensemble réservoir et tubulure de remplissage dont au moins un des deux composants de l'ensemble est réalisé en matière plastique. Il est particulièrement bien adapté à un ensemble dont la tubulure de remplissage est réalisée en matière plastique. Le système d'obturation conforme à l'invention comprend lui-même au moins une pièce en matière plastique.

Par matière plastique, on entend désigner toute matière comprenant au moins un polymère en résine de synthèse.

Tous les types de matière plastique peuvent convenir. Des matières plastiques convenant bien appartiennent à la catégorie des matières thermoplastiques.

Par matière thermoplastique, on désigne tout polymère thermoplastique, y compris les élastomères thermoplastiques, ainsi que leurs mélanges. On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés.

Tout type de polymère ou de copolymère thermoplastique dont la température de fusion est inférieure à la température de décomposition conviennent. Les matières thermoplastiques de synthèse qui présentent une plage de fusion étalée sur au moins 10 degrés Celsius conviennent particulièrement bien. Comme exemple de telles matières, on trouve celles qui présentent une polydispersion de leur masse moléculaire.

En particulier, on peut utiliser des polyoléfines, des polyhalogénures de vinyle, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits *supra*.

Le système d'obturation selon l'invention a pour but de jouer le rôle d'un bouchon qui ferme de manière étanche la partie supérieure de la tubulure de remplissage en dehors des périodes de remplissage du réservoir dans le but d'éviter tout dégagement et perte de carburant liquide et vapeur vers l'atmosphère lorsque le réservoir contient du carburant.

Selon l'invention, le système d'obturation est intégré à la tête de tubulure, c'est-à-dire qu'il est incorporé à un ensemble de pièces qui sont montées sur l'extrémité supérieure de la tubulure de remplissage et qui forment une tête dont une partie constituée par un corps coiffe la tubulure et une autre partie est insérée dans le haut de cette tubulure sur une longueur déterminée.

Le système d'obturation permet l'ouverture automatique de la tubulure via l'action d'un pistolet distributeur de carburant. Par ouverture automatique, on entend ouverture réalisée sous la seule action du pistolet distributeur, à l'exclusion de toute autre sollicitation mécanique. Le pistolet distributeur est celui qui équipe les tuyaux souples des pompes à carburant dans les stations-service.

Le système d'obturation conforme à l'invention comprend un obturateur, c'est-à-dire un dispositif fermant le passage des gaz et des liquides dans la tubulure. Cet obturateur peut se trouver sous différentes formes dans le système d'obturation selon l'invention. Une forme qui convient bien est une forme de plaque mobile qui bouche le passage lorsqu'elle se trouve en position fermée.

Selon l'invention, l'obturateur est escamotable sous l'action d'une poussée dirigée contre lui selon un axe parallèle à l'axe de la tête de tubulure. Divers moyens peuvent être présents pour rendre l'obturateur escamotable. Un moyen ayant donné de bons résultats est une tige solidaire de la tête de tubulure et située à la périphérie de l'obturateur, qui peut servir d'axe de rotation permettant le basculement de l'obturateur.

L'obturateur est maintenu en position fermée par un ressort de rappel. Un ressort convenant bien est un ressort de torsion disposé autour de la tige et dont une extrémité est solidaire de l'obturateur.

Selon un mode de réalisation particulier de l'invention, l'obturateur est muni de moyens de blocage qui sont débrayables par un effort de poussée parallèle à l'axe de la tête de tubulure.

Par moyens de blocage, on entend des moyens qui empêchent l'escamotage de l'obturateur.

Dans ce mode de réalisation, tous moyens de blocage appropriés peuvent être utilisés. Des moyens de blocage possibles qui donnent de bons résultats sont constitués d'une palette capable de verrouiller la rotation d'un anneau qui peut être engagé à serrage avec l'obturateur.

De tels moyens de blocage sont par exemple constitués d'une lunette tronc-cylindrique en forme d'anneau pouvant tourner autour de son axe et aplati sur ses deux faces inférieure et supérieure, cette lunette pouvant être engagée à serrage avec l'obturateur. Cette lunette est réalisée en matériau de bonne stabilité dimensionnelle et de bonne résistance chimique en présence de carburant Les matériaux plastiques ou métalliques conviennent bien. L'acier inoxydable a donné de bons résultats.

Le verrouillage de la lunette par la palette peut être réalisé par tout dispositif approprié. Un exemple d'un tel dispositif est une palette, en forme de cercle ou de tronc de cône ajouré, qui porte sur sa circonférence un ergot qui peut être inséré dans une encoche située sur la lunette. Dans cet exemple, la palette peut être déformée par un effort appliqué perpendiculairement à sa surface, de telle manière que l'ergot soit désengagé de l'encoche de la lunette.

Un autre exemple qui a donné d'excellents résultats est celui où la palette communique la poussée à un ressort de compression en forme d'épingle recourbée qui se termine par un ergot pouvant être inséré dans une encoche située sur la lunette et sur un corps supportant cette lunette. Dans cet autre exemple, la déformation de la palette est capable de comprimer le ressort en forme d'épingle et de désengager l'ergot de l'encoche de la lunette.

Lorsque les moyens de blocage sont constitués d'une palette comme décrit supra, l'engagement à serrage de la lunette avec l'obturateur peut être réalisé au moyen d'un dispositif à baïonnette dont les parties qui coopèrent sont disposées, respectivement, sur la surface cylindrique intérieure de la lunette et sur le pourtour de l'obturateur.

Dans cette configuration des moyens de blocage de l'obturateur du système selon l'invention, les parties du dispositif à baïonnette peuvent être constituées d'ergots aplatis dont l'épaisseur varie en forme de biseau et qui sont disposés renversés l'un au-dessus de l'autre.

Un deuxième ressort de torsion permet de maintenir la lunette en position déverrouillée et desserrée lorsque l'obturateur est ouvert. Ce ressort possède une de ses extrémités fixée au corps coiffant l'extrémité supérieure de la tubulure de remplissage. L'autre extrémité du deuxième ressort est solidaire de la lunette. Un moyen de solidarisation est, par exemple, l'introduction d'une extrémité recourbée d'une spire du ressort dans un orifice percé dans une languette qui prolonge la lunette, l'extrémité du ressort pouvant pivoter librement dans l'orifice.

Dans cette configuration du système selon l'invention, lorsque le réservoir est monté sur un véhicule automobile, une tringle peut aussi relier la lunette à un portillon de carrosserie protégeant la tête de tubulure de remplissage et permettre la tension du deuxième ressort de torsion et la rotation de la lunette jusqu'à une position verrouillée lorsque le portillon est fermé.

Le verrouillage en rotation de la lunette peut être réalisé de la manière décrite *supra*, par exemple au moyen de la décompression d'un ressort en épingle recourbée terminée par ùn ergot qui est inséré dans une encoche située sur la lunette.

Un mode de fixation de la tringle à la lunette est celui dans lequel la tringle constitue le coulisseau d'une fente dans une pièce oblongue en forme de coulisse portée par une languette solidaire de la lunette. Avantageusement, la coulisse est dimensionnée de manière telle que l'ouverture du portillon à partir d'une position fermée soit sans effet sur l'état verrouillé en rotation de la lunette.

L'invention concerne aussi un procédé pour ouvrir une tête de tubulure de remplissage d'un réservoir à carburant par l'introduction d'un pistolet distributeur de carburant, selon lequel, après l'ouverture d'un portillon de carrosserie protégeant la tête de tubulure de remplissage, l'introduction à force du pistolet selon une direction parallèle à l'axe de la tête de tubulure contre une palette provoque d'abord le déverrouillage d'une lunette en forme d'anneau aplati mobile en rotation, ensuite le déblocage et le desserrage d'un obturateur suivi de son basculement et de son ouverture par escamotage, la force de poussée d'introduction étant suffisante pour vaincre une force de rappel exercée par un ressort et le déverrouillage de la rotation de la lunette et l'ouverture de l'obturateur s'effectuant de la manière suivante :
a) une force de poussée est exercée sur la palette selon une direction parallèle à l'axe de la tête de tubulure, ce qui provoque d'abord le déblocage de la rotation de la lunette et ensuite l'ouverture progressive d'une baïonnette tendant à débloquer et desserrer l'obturateur;
b) un deuxième ressort tendu en torsion, dont une extrémité est fixe et l'autre est solidaire de la lunette se détend en entraînant la lunette en rotation dans un sens propice à l'ouverture de la baïonnette;
c) sous l'effet de cette rotation, des ergots taillés en biseau et disposés sur la face cylindrique interne de la lunette se désengagent de biseaux analogues renversés situés autour de l'obturateur, de manière à désolidariser la lunette et l'obturateur précédemment assemblés à force par serrage;
d) un joint circulaire compressible disposé à la périphérie de l'obturateur, entre ce dernier et la lunette se décomprime et l'obturateur bascule.

Dans ce procédé, la signification des termes employés est identique à celle des mêmes termes utilisés dans la description du système d'obturation qui précède.

Selon ce procédé, après ouverture, la tête de tubulure de remplissage est obturée à nouveau et verrouillée via la fermeture du portillon de carrosserie, par un mouvement latéral d'une tringle dont une extrémité est articulée en un point situé à la base du portillon et l'autre fait office de coulisseau d'une fente dans une pièce oblongue en forme de coulisse portée par une languette qui prolonge la lunette, le mouvement de la tringle faisant tourner la lunette dans un sens propice à la fermeture de la baïonnette, au serrage du joint et au blocage de la lunette en rotation par la palette.

Comme exposé plus haut pour le système d'obturation selon l'invention, le verrouillage en rotation dé la lunette peut se réaliser, par exemple, en décomprimant un ressort en épingle recourbée terminée par un ergot qui vient s'insérer dans une encoche qui a été creusée sur la lunette.

Les figures qui suivent ont pour but d'illustrer l'invention dans le cas particulier de l'obturation d'une tubulure de remplissage de réservoir à carburant d'un véhicule automobile, sans en limiter sa portée.

La figure 1 donne une vue éclatée en perspective des différentes pièces constituant un système d'obturation conforme à l'invention.

Les figures 2 et 3 illustrent par des vues en perspective le mécanisme de verrouillage commandé par le portillon de carrosserie.

Les figures 4 et 5 montrent le système d'obturation dans son état fermé, portillon fermé, lunette verrouillée et obturateur fermé. La figure 4 donne une vue en perspective et la figure 5 une vue en plan du système.

Les figures 6 à 9 illustrent le cas d'un système fermé, portillon ouvert, lunette verrouillée et obturateur fermé. La figure 6 est une vue en perspective, la figure 7 est une vue. en coupe selon l'axe EE apparaissant sur la vue en plan de la figure 8. La figure 9 est une autre vue en coupe selon l'axe AA de la figure 8, montrant le pistolet de distribution de carburant arrivant contre la palette.

Les figures 10 à 13 montrent le détail de réalisation d'une lunette, la figure 10 étant une vue en perspective, les figures 11 et 12 étant des vues en plan de chacune des deux faces de la lunette et la figure 13 étant une vue en coupe selon l'axe FF de la figure 11.

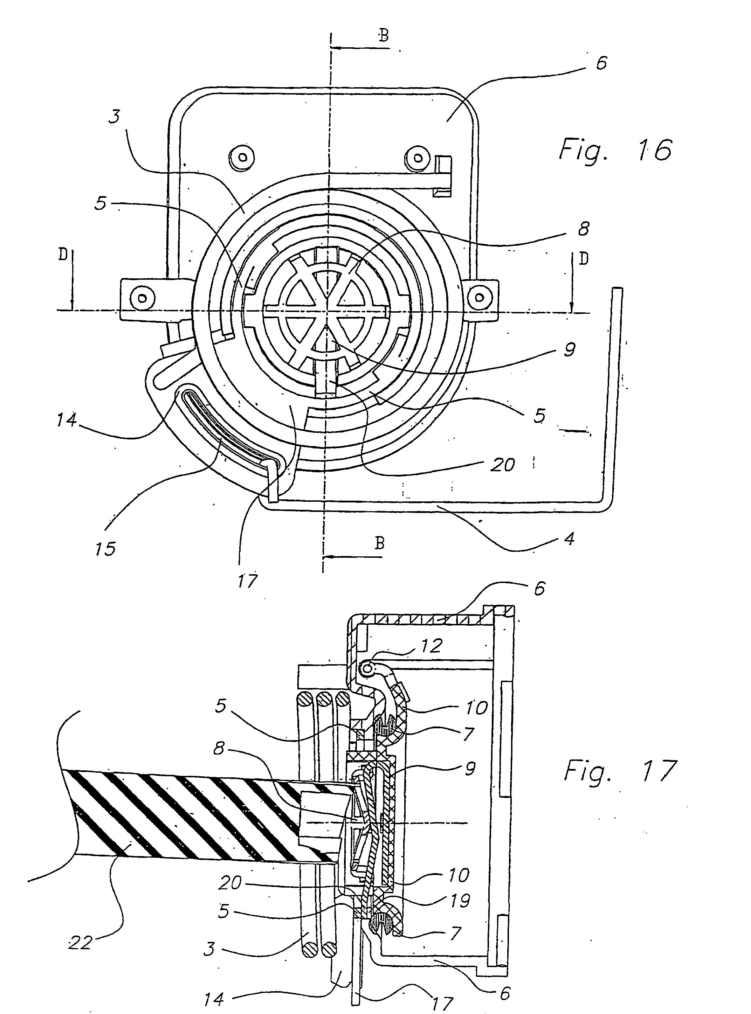

Les figures 14 à 17 illustrent le cas d'un système fermé, portillon ouvert, lunette déverrouillée et obturateur fermé. La figure 14 est une vue en perspective, la figure 15 est une vue en coupe selon l'axe DD apparaissant sur la vue en plan de la figure 16. La figure 17 est une autre vue en coupe selon l'axe BB de la figure 16, montrant le pistolet de distribution de carburant fournissant un effort de poussée sur la palette selon un axe parallèle à l'axe de la tête de la tubulure. On y distingue l'écrasement du ressort en épingle et le déverrouillage de la lunette.

Les figures 18 et 19 illustrent le cas d'un système ouvert, portillon ouvert, lunette déverrouillée et obturateur ouvert. La figure 18 est une vue en plan et la figure 19 une vue en coupe selon l'axe CC de la figure 18. Dans ces figures, on peut distinguer l'obturateur en position basculée ouverte, permettant le passage du pistolet distributeur.

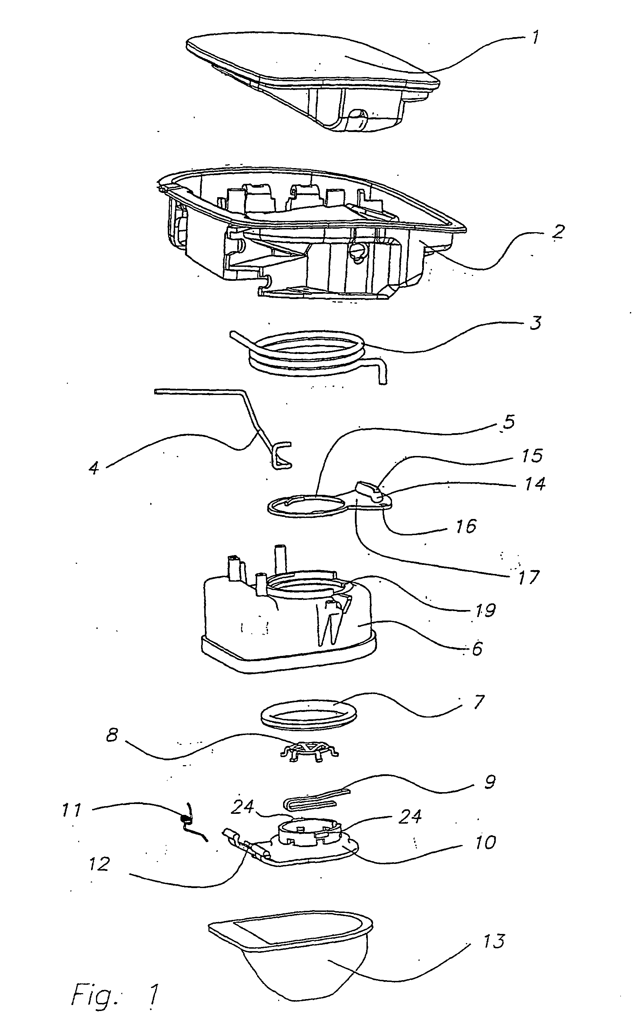

A la figure 1, sont illustrés, de haut en bas, les différentes pièces composant le système d'obturation : un portillon (1) de carrosserie, un boîtier de trappe (2), un ressort de torsion (3), une tringle (4), une lunette (5), comportant une languette (17) qui porte un orifice (16) et une pièce oblongue (14) avec une coulisse (15), un corps (6) supportant la lunette (5), un joint compressible (7), une palette (8), un ressort de compression (9) en forme d'épingle recourbée, un obturateur (10) muni d'un autre ressort de torsion (11) et d'un axe dé rotation (12) et un guide (13) pour un pistolet distributeur. Le ressort (3) agit comme ressort de rappel en rotation de la lunette (5) vers sa position déverrouillée. Le ressort (11) agit comme ressort de rappel de l'obturateur (10) vers sa position fermée. On distingue aussi à la figure 1 les ergots aplatis (23) et (24) situés sur le pourtour de l'obturateur (10).

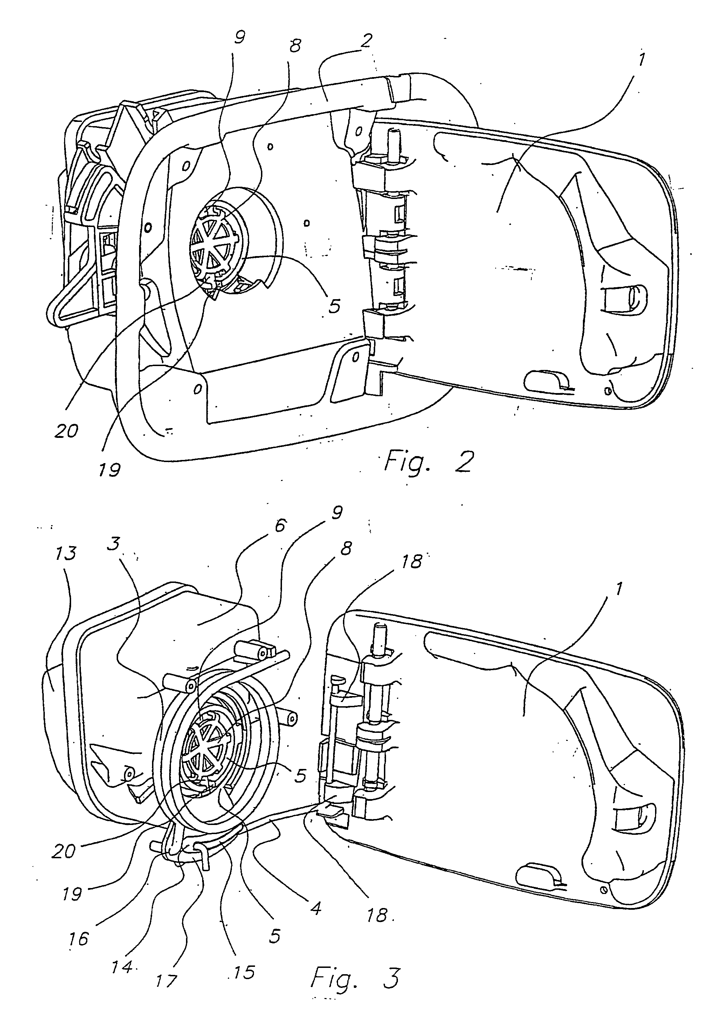

A la figure 2, on peut voir une tête de tubulure de remplissage de réservoir à carburant dans une position fermée, obturateur verrouillé, illustrant le portillon (1), le boîtier de trappe (2), la palette (8), le ressort de compression en épingle (9) terminé par un ergot (20) affleurant à la surface d'une encoche (19) du corps(6). Cette encoche (19) permet le débattement du ressort en épingle (9) au-delà de la lunette (5).

A la figure 3, la tête de tubulure dans la même situation qu'à la figure précédente est représentée, le boîtier de trappe (2) ayant été enlevé afin de montrer les pièces sous-jacentes. On y distingue, en plus des pièces déjà visibles sur la figure 2, le corps (6) supportant la lunette (5), le guide (13), la languette (17) de la lunette (5) portant l'orifice (16) dans lequel est inséré l'extrémité du ressort (3) de rappel en rotation de la lunette en position déverrouillée, ici en position tendue, lunette (5) verrouillée. La languette (17) porte aussi une pièce oblongue (14) avec une coulisse (15), dans laquelle une extrémité de la tringle (4) est insérée et fait fonction de coulisseau. La tringle (4) a son autre extrémité insérée dans deux supports (18) d'axes solidaires du portillon (1).

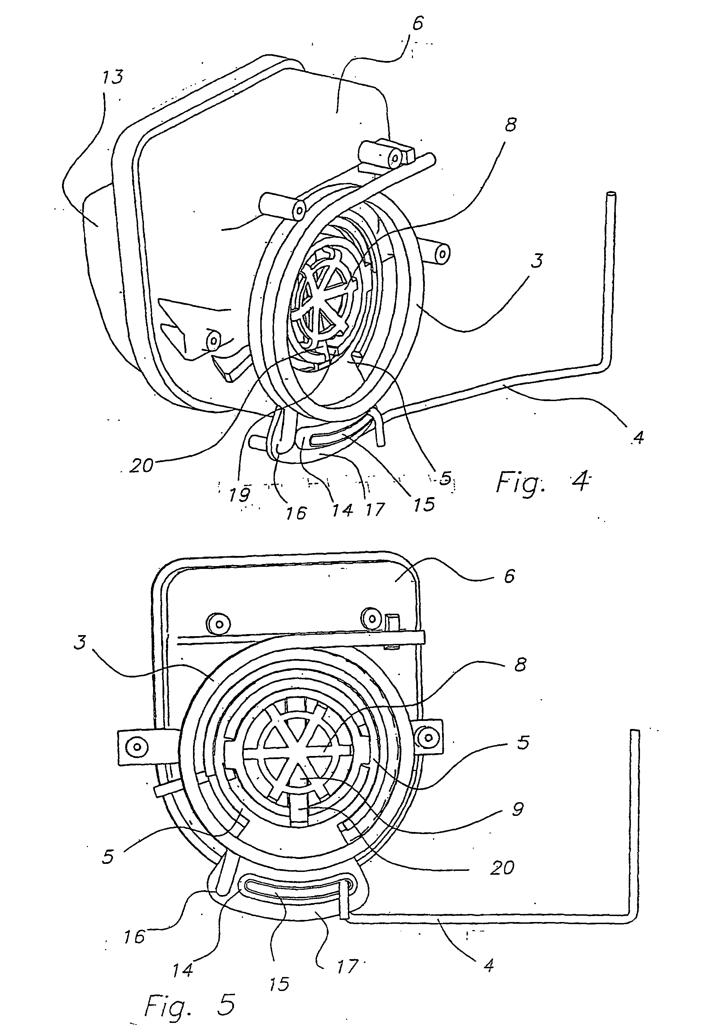

Aux figures 4 et 5 on voit un système fermé, portillon fermé (non représenté), lunette (5) verrouillée et obturateur fermé. Dans ces figures, on peut distinguer le corps (6) portant une encoche (19) à la surface de laquelle affleure l'ergot (20) du ressort en épingle (9), ainsi que la palette (8). La languette (17) de la lunette (5) porte les mêmes éléments (14) à (17) et la tringle (4) que déjà décrits à la figure 3.

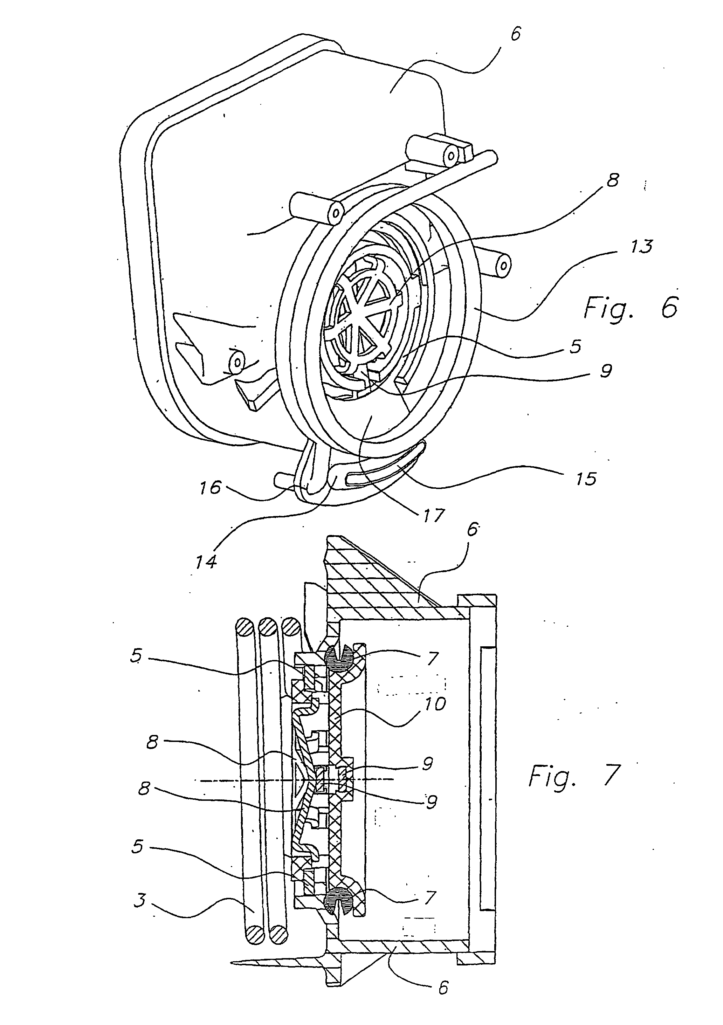

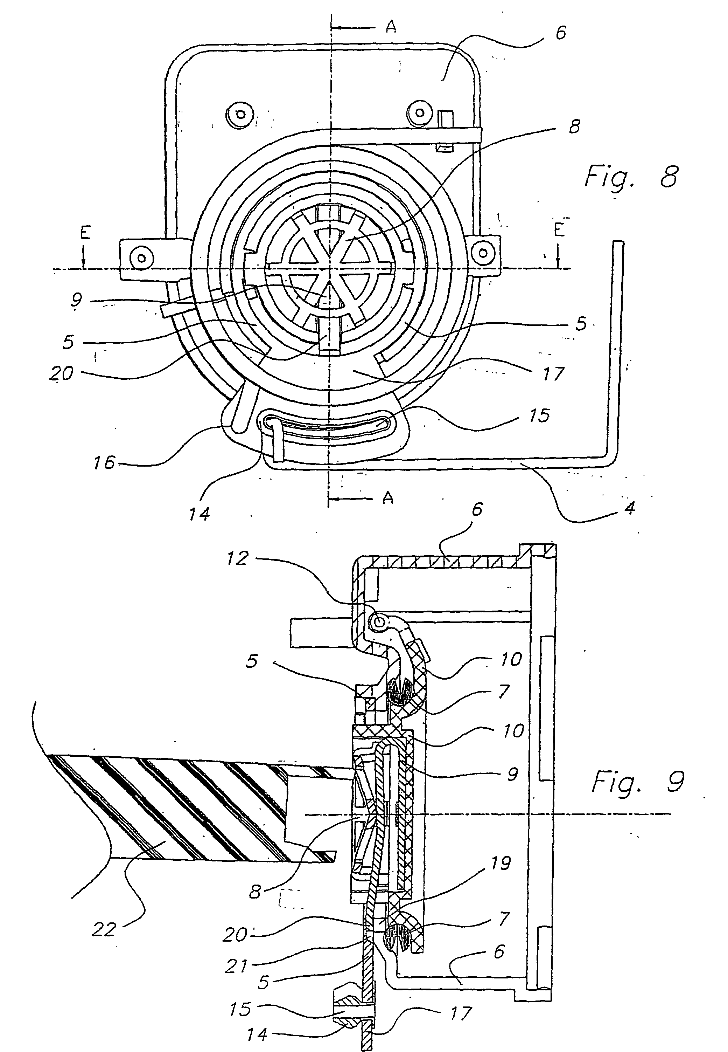

A la figure 9, qui est une coupe selon l'axe AA de la vue en plan de la figure 8, on peut voir un pistolet de remplissage (22) dont l'extrémité vient buter sur la palette (8). Dans cette position, représentée dans la même situation aux figures 6 à 8, le portillon est ouvert et l'extrémité de la tringle (4) (non représentée à la figure 6) a coulissé jusqu'à la partie gauche de la coulisse (15). Cependant, la lunette (5) reste verrouillée et l'obturateur (10) bloqué en position fermée, car l'ergot (20) du ressort en épingle (9) est resté inséré dans l'encoche (21) de la lunette (5). Le joint souple (7) est visible sur les deux vues en coupe aux figures 7 et 9. A la figure 9, on voit encore l'encoche (19) dans le corps (6) qui permet le débattement de l'ergot (20) de l'épingle (9) au-delà de la lunette (5).

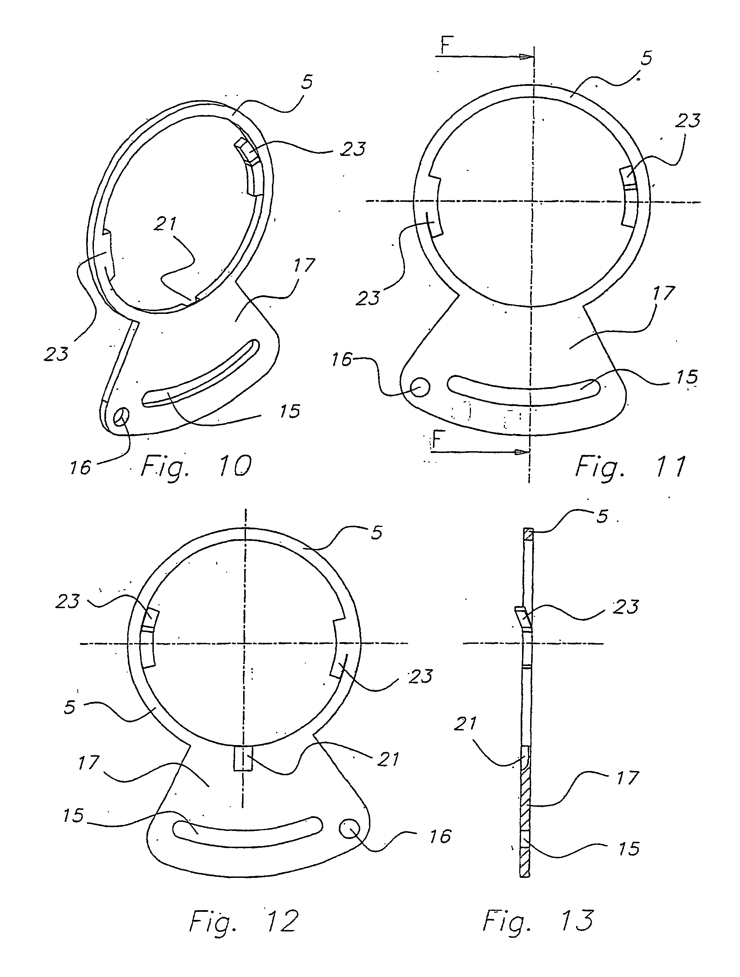

Aux figures 10 à 13, on peut distinguer les détails de la lunette (5), la pièce oblongue (14) n'étant toutefois pas représentée : les ergots en forme de biseau (23), l'encoche (21) où peut venir s'insérer l'ergot (20) du ressort en épingle (9), la languette (17) portant la fente (15) et l'orifice (16).

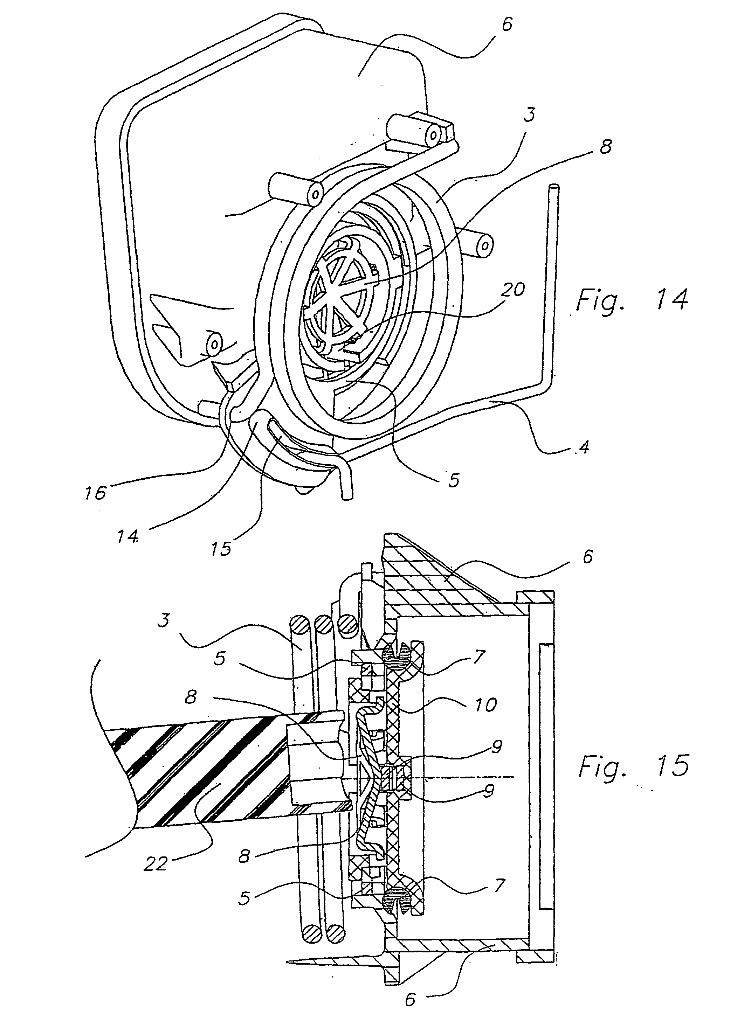

Aux figures 14. à 17, on montre la situation du système avec le pistolet distributeur (22) appuyant sur la palette (8) et comprimant le ressort en épingle (9), l'ergot (20) terminant ce dernier étant sorti de l'encoche (21) de la lunette (5) et entré dans l'encoche (19) lui faisant face sur le corps (6). Le ressort de torsion (3) a rappelé la lunette (5) en position déverrouillée en la faisant tourner dans le sens horlogique, débloquant ainsi l'obturateur (10).

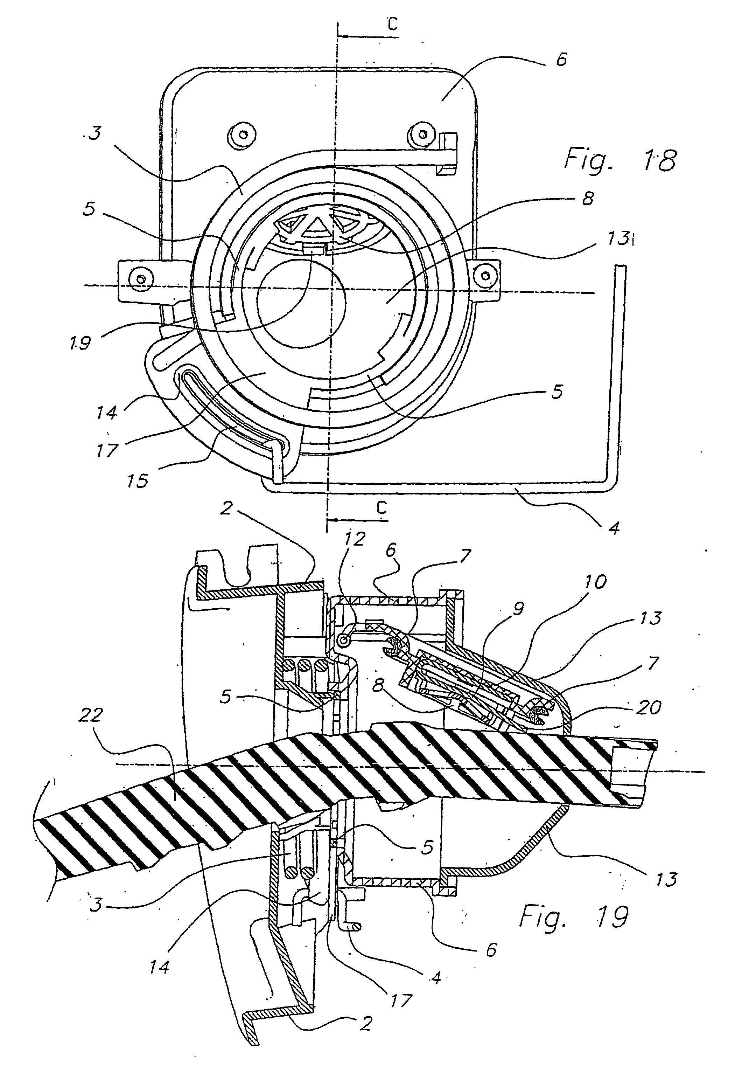

A la figure 19, on voit le pistolet distributeur (22) complètement engagé dans le système et traversant le boîtier de trappe (2), le ressort (3), la lunette (5), le corps (6) et le guide (13). L'obturateur (10) a basculé autour de son axe (12) et est maintenu contre le nez du pistolet (22) par son ressort de rappel (11) non visible sur la vue en coupe de la figure 19.

## Revendications

1. Système d'obturation intégré à une tête de tubulure de remplissage de réservoir à carburant, comprenant un obturateur (10) et permettant l'ouverture automatique de la tubulure via l'action d'un pistolet distributeur de carburant (22), selon lequel l'obturateur (10) est escamotable sous l'action d'une poussée dirigée contre lui selon un axe parallèle à l'axe de la tête de tubulure, un ressort de rappel (11) permet de maintenir l'obturateur (10) en position fermée et l'obturateur (10) est muni de moyens de blocage qui sont débrayables par un effort de poussée parallèle à l'axe de la tête de tubulure, **caractérisé en ce que** les moyens de blocage sont constitués d'une palette (8) capable de verrouiller la rotation d'un anneau (5) qui peut être engagé à serrage avec l'obturateur (10).

2. Système selon la revendication précédente, **caractérisé en ce que** l'anneau est une lunette (5) tronc-cylindrique, pouvant tourner autour de son axe, et aplatie sur ses deux faces inférieure et supérieure.

3. Système selon la revendication précédente, **caractérisé en ce que** l'engagement à serrage est réalisé au moyen d'un dispositif à baïonnette dont les parties (23) (24) qui coopèrent sont disposées, respectivement, sur la surface cylindrique intérieure de la lunette et sur le pourtour de l'obturateur.

4. Système selon la revendication précédente, **caractérisé en ce que** les parties du dispositif à baïonnette sont constituées d'ergots aplatis (23) (24) dont l'épaisseur varie en forme de biseau et qui sont disposés renversés l'un au-dessus de l'autre.

5. Système selon une quelconque des revendications 2 à 4, **caractérisé en ce qu'**un ressort de torsion (3) permet de maintenir la lunette (5) en position déverrouillée et desserrée lorsque l'obturateur (10) est ouvert.

6. Système selon une quelconque des revendications 2 à 5, **caractérisé en ce qu'**une tringle (4) relie la lunette (5) à un portillon de carrosserie (1) protégeant la tête de tubulure de remplissage et permet la tension du ressort de torsion (3) et la rotation de la lunette (5) jusqu'à une position verrouillée lorsque le portillon (1) est fermé.

7. Système selon la revendication précédente, **caractérisé en ce que** la tringle (4) est fixée à la lunette (5) en constituant le coulisseau d'une fente (15) dans une pièce oblongue (14) en forme de coulisse portée par une languette (17) solidaire de la lunette (5), la coulisse (15) étant dimensionnée de telle manière que l'ouverture du portillon (1) à partir d'une position fermée soit sans effet sur l'état verrouillé en rotation de la lunette (5).

8. Procédé pour ouvrir une tête de tubulure de remplissage d'un réservoir à carburant par l'introduction d'un pistolet distributeur de carburant (22), **caractérisé en ce qu'**après l'ouverture d'un portillon de carrosserie (1) protégeant la tête de tubulure de remplissage, l'introduction à force du pistolet (22) selon une direction parallèle à l'axe de la tête de tubulure contre une palette (8) provoque d'abord le déverrouillage d'une lunette (5) en forme d'anneau aplati mobile en rotation, ensuite le déblocage et le desserrage d'un obturateur (10) suivi de son basculement et de son ouverture par escamotage, la force de poussée d'introduction étant suffisante pour vaincre une force de rappel exercée par un ressort (11) et le déverrouillage de la rotation de la lunette (5) et l'ouverture de l'obturateur (10) s'effectuant de la manière suivante :
a) une force de poussée est exercée sur la palette (8) selon une direction parallèle à l'axe de la tête de tubulure, ce qui provoque d'abord le déblocage de la rotation de la lunette (5) et ensuite l'ouverture progressive d'une baïonnette tendant à débloquer et desserrer l'obturateur (10);
b) un deuxième ressort (3) tendu en torsion, dont une extrémité est fixe et l'autre est solidaire de la lunette (5) se détend en entraînant la lunette (5) en rotation dans un sens propice à l'ouverture de la baïonnette;
c) sous l'effet de cette rotation, des ergots (23) taillés en biseau et disposés sur la face cylindrique interne de la lunette (5) se désengagent de biseaux (24) analogues renversés situés autour de l'obturateur (10), de manière à désolidariser la lunette (5) et l'obturateur (10) précédemment assemblés à force par serrage;
d) un joint circulaire compressible (7) disposé à la périphérie de l'obturateur (10), entre ce dernier et la lunette (5) se décomprime et l'obturateur (10) bascule.

9. Procédé selon la revendication précédente, **caractérisé en ce qu'**après ouverture, la tête de tubulure de remplissage est obturée à nouveau et verrouillée via la fermeture du portillon de carrosserie (1), par un mouvement latéral d'une tringle (4) dont une extrémité est articulée en un point (18) situé à la base du portillon et l'autre fait office de coulisseau d'une fente (15) dans une pièce oblongue (14) en forme de coulisse portée par une languette (17) qui prolonge la lunette (5), le mouvement de la tringle (4) faisant tourner la lunette (5) dans un sens propice à la fermeture de la baïonnette, au serrage du joint (7) et au blocage de la rotation de la lunette (5) par la palette (8).

## Patentansprüche

1. Verschlußsystem; das in einen Kopf eines Füllrohres für einen Kraftstoffbehälter integriert ist, mit einem Verschlußteil (10) und der Möglichkeit eines automatischen Öffnens des Füllrohres durch das Einführen einer Kraftstoffabgabepistole (22), bei welchem der Verschlußteil (10) unter der Wirkung eines Druckes bewegbar ist, der auf ihn gemäß einer Achse parallel zur Achse des Füllrohrkopfes ausgeübt wird, einer Vorspannfeder (11), die es gestattet, den Verschlußteil (10) in der Schließstellung zu halten, wobei der Verschlußteil (10) mit Blockiermitteln ausgestattet ist, die unter der Wirkung eines Druckes parallel zur Achse des Füllrohrkopfes lösbar sind, **dadurch gekennzeichnet, daß** die Blockiermittel durch einen Einsatz (8) gebildet sind, der befähigt ist, die Drehverriegelung eines Ringes (5) zu bewirken, welcher mit dem Verschlußteil (10) durch Klemmung in Eingriff versetzbar ist.

2. System nach Anspruch 1, **dadurch gekennzeichnet, daß** der Ring eine zylinderabschnittförmige Fassung (5) ist, die um ihre Achse drehbar und auf der unteren und oberen Seite flach ausgebildet ist.

3. System nach einem der vorhergehenden Ansprüche, **dadurch gekennzeichnet, daß** der Klemmeingriff mit Hilfe einer Bajonettvorrichtung erzeugt wird, deren zusammenwirkende Teile (23) (24) auf der zylindrischen Innenseite der Fassung und am Umfang des Verschlußteiles angeordnet sind.

4. System nach einem der vorhergehenden Ansprüche, **dadurch gekennzeichnet, daß** die Teile der Bajonettvorrichtung durch zwei flache Vorsprünge (23) (24) gebildet sind, deren Dicke in Schrägform variiert und die gegensinnig übereinander angeordnet sind.

5. System nach einem der Ansprüche 2 bis 4, **dadurch gekennzeichnet, daß** eine Torsionsfeder (3) es gestattet, die Fassung (5) in der entriegelten und entklemmten Stellung zu halten, wenn der Verschlußteil (10) offen ist.

6. System nach einem der Ansprüche 2 bis 5, **dadurch gekennzeichnet, daß** ein Gestänge (4) die Fassung (5) mit einer Tür (1) der Karosserie verbindet, wobei die Tür den Kopf des Füllrohres schützt und die Spannung der Torsionsfeder (3) sowie die Drehung der Fassung (5) bis in eine Verriegelungsposition ermöglicht, wenn die Tür (1) geschlossen ist.

7. System nach einem der vorhergehenden Ansprüche, **dadurch gekennzeichnet, daß** das Gestänge (4) an der Fassung (5) befestigt ist und ein Gleitstück in einem Schlitz (15) bildet, der in einem Gleitführungsteil (14) ausgebildet ist, der von einer Zunge (17) getragen ist, die mit der Fassung (5) verbunden ist, wobei die Gleitführung (15) so dimensioniert ist, daß das Öffnen der Tür (1) aus der Schließstellung keinen Einfluß auf den Zustand der Drehverriegelung der Fassung (5) hat.

8. Verfahren zum Öffnen des Kopfes eines Füllrohres eines Kraftstoffbehälters durch Einführen einer Kraftstoffabgabepistole (22), **dadurch gekennzeichnet, daß** nach dem Öffnen einer Tür (1) der Karosserie, welche den Kopf des Füllrohres schützt, das Einführen der Pistole (22) unter Krafteinwirkung in einer Richtung parallel zur Achse des Kopfes des Füllrohres gegen einen Einsatz (8) zunächst das Entriegeln einer Fassung (5) in Form eines flachen drehbaren Ringes verursacht, sodann das Entblockieren und Entklemmen eines Verschlußteiles (10), gefolgt von dessen Schwenken und Öffnen durch Wegbewegen, wobei die Einführdruckkraft ausreichend ist, um eine Vorspannkraft zu überwinden, die von einer Feder (11) ausgeübt wird, und das Entriegeln der Drehbewegung der Fassung (5) sowie das Öffnen des Verschlußteiles auf folgende Weise erfolgt:
a) eine Druckkraft wird auf die Fassung (8) in einer Richtung parallel zur Achse des Kopfes des Füllrohres ausgeübt, was zunächst das Entriegeln der Drehung der Fassung (5) und sodann das progressive Öffnen eines Bajonettverschlusses bewirkt, der bestrebt ist, den Verschlußteil (10) zu entriegeln und zu entklemmen;
b) eine zweite gespannte Torsionsfeder (3), von der ein Ende fixiert und das andere mit der Fassung (5) verbunden ist, sich entspannt, indem sie die Fassung (5) unter Drehung in einer das Öffnen des Bajonettverschlusses begünstigenden Richtung mitnimmt;
c) unter der Wirkung der Drehung die Vorsprünge (23), die auf der zylindrischen Innenseite der Fassung (5) vorgesehen sind, sich von den analogen gegensinnigen Schrägen (24) lösen, die um den Umfang des Verschlußteiles (10) vorgesehen sind, derart, daß die Fassung (5) und der Verschlußteil (10), die vorher durch eine Klemmkraft verbunden waren, voneinander gelöst werden;
d) eine zusammendrückbare, ringförmige Dichtung (7), die am Umfang des Verschlußteiles (10) vorgesehen ist, zwischen diesem und der Fassung (5) entspannt wird und der Verschlußteil (10) schwenkt.

9. Verfahren nach dem vorhergehenden Anspruch, **dadurch gekennzeichnet, daß** nach dem Öffnen der Kopf des Füllrohres erneut verschlossen und verriegelt wird, über das Schließen der Karosserietür (1), durch eine seitliche Bewegung eines Gestänges (4), von dem ein Ende an einem Punkt (18) angelenkt ist, der an der Basis der Tür vorgesehen ist, und das andere Ende als Gleitstück in einem Schlitz (15) eines langgestreckten Gleitfühnzngsteiles (14) gleitet, der von einer Zunge (17) getragen ist, welche die Fassung (5) verlängert, wobei die Bewegung des Gestänges (4) eine Drehung der Fassung (5) in einer Richtung zum Schließen des Bajonettes, zum Klemmen der Dichtung (7) und zum Blockieren der Drehung der Fassung (5) durch den Einsatz (8) bewirkt.

## Claims

1. Closure system integrated with a fuel tank filler head, comprising a shutter (10) and enabling the automatic opening of the pipe via the action of a nozzle (22), according to which the shutter (10) is retractable under the action of a thrust directed against it along an axis parallel to the axis of the filler head, a return spring (11) enables the shutter (10) to be kept in the closed position, and the shutter (10) is fitted with blocking means that can be released by a thrust force parallel to the axis of the filler head, **characterized in that** the blocking means consist of a spider (8) capable of locking the rotation of a ring (5) that can be engaged, with clamping, with the shutter (10).

2. System according to the preceding claim, **characterized in that** the ring is a truncated-cylinder bezel (5) which can turn about its axis and is flattened on both its lower and upper faces.

3. System according to the preceding claim, **characterized in that** the clamping engagement is produced by means of a bayonet device whose interacting parts (23) (24) are arranged, respectively, on the inner cylindrical surface of the bezel and on the periphery of the shutter.

4. System according to the preceding claim, **characterized in that** the parts of the bayonet device consist of flattened lugs (23) (24) whose thickness varies in the form of a bevel and which are arranged inverted one on top of the other.

5. System according to any one of Claims 2 to 4, **characterized in that** a torsion spring (3) enables the bezel (5) to be kept in the unlocked and unclamped position when the shutter (10) is open.

6. System according to any one of Claims 2 to 5, **characterized in that** a rod (4) connects the bezel (5) to a bodywork flap (1) protecting the filler head and enables the torsion spring (3) to be tensioned and the bezel (5) to be rotated as far as a locked position when the flap (1) is closed.

7. System according to the preceding claim, **characterized in that** the rod (4) is fastened to the bezel (5), at the same constituting the slider of a slot (15) in an oblong piece (14) in the form of a slideway borne by a tongue (17) integral with the bezel (5), the slideway (15) being dimensioned in such a way that the opening of the flap (1) from a closed position has no effect on the locked-in-rotation state of the bezel (5).

8. Method for opening a fuel tank filler pipe head by the introduction of a nozzle (22), **characterized in that**, after opening a bodywork flap (1) protecting the filler head, the forceful introduction of the nozzle (22) in a direction parallel to the axis of the filler head against a spider (8) causes first of all the unlocking of a bezel (5) in the form of a rotationally mobile flattened ring, then the unblocking and unclamping of a shutter (10) followed by its tilting and its opening by retraction, the introduction thrust force being sufficient to overcome a return force exerted by a spring (11), and the unlocking of the rotation of the bezel (5) and the opening of the shutter (10) being carried out in the following way :
a) a thrust force is exerted on the spider (8) in a direction parallel to the axis of the filler head, which causes first of all the unblocking of the rotation of the bezel (5) and then the gradual opening of a bayonet tending to unblock and unclamp the shutter (10);
b) a second spring (3), tensioned in torsion and one end of which is fixed and the other end of which is integral with the bezel (5), relaxes and so drives the bezel (5) in rotation in a direction favourable to the opening of the bayonet;
c) under the effect of this rotation, bevel-cut lugs (23) arranged on the internal cylindrical face of the bezel (5) disengage from analogous inverted bevels (24) situated around the shutter (10), so as to disunite the bezel (5) and the shutter (10) previously assembled with force by clamping;
d) a compressible circular seal (7) arranged at the periphery of the shutter (10), between the latter and the bezel (5), decompresses and the shutter (10) tilts.

9. Method according to the preceding claim, **characterized in that**, after opening, the filler head is closed off again and locked via the closing of the bodywork flap (1), by a lateral movement of a rod (4), one end of which is articulated at a point (18) situated at the base of the flap and the other end of which serves as a slider of a slot (15) in an oblong piece (14) in the form of a slideway borne by a tongue (17) that extends the bezel (5), the movement of the rod (4) causing the bezel (5) to turn in a direction favourable to closing the bayonet, to clamping the seal (7) and to the blocking of the rotation of the bezel (5) by the spider (8).
